# EUROPÄISCHE PATENTSCHRIFT

(11) **EP 2 997 651 B1**
(45) Veröffentlichungstag und Bekanntmachung des Hinweises auf die Patenterteilung: **19.12.2018**
(21) Anmeldenummer: 14722230.1
(22) Anmeldetag: 09.05.2014
(51) Int. Cl.: H02M 1/15, H02J 1/02, H02M 7/537, B60L 11/18

(54) **VERFAHREN UND SCHALTUNG ZUR VERBESSERTEN NUTZUNG EINER KAPAZITÄT IN EINEM ZWISCHENKREIS**
METHOD AND CIRCUIT FOR THE IMPROVED USE OF A CAPACITANCE IN AN INTERMEDIATE CIRCUIT
PROCÉDÉ ET CIRCUIT POUR L'UTILISATION AMÉLIORÉE D'UNE CAPACITÉ DANS UN CIRCUIT INTERMÉDIAIRE

(30) Priorität: 17.05.2013 DE 102013209185
(43) Veröffentlichungstag der Anmeldung: 23.03.2016
(73) Patentinhaber: Robert Bosch GmbH, 70442 Stuttgart (DE); Samsung SDI Co., Ltd., Yongin-si, Gyeonggi-do 446-577 (KR)
(72) Erfinder: BUTZMANN, Stefan, 58579 Schalksmühle (DE)
(74) Vertreter: Bee, Joachim
(86) Internationale Anmeldenummer: PCT/EP2014/059508
(87) Internationale Veröffentlichungsnummer: WO 2014/184096

(56) Entgegenhaltungen:
- EP-A1- 2 194 629
- WO-A1-2013/004019
- US-A- 5 329 222

## Beschreibung

### Stand der Technik

Die vorliegende Erfindung betrifft ein Verfahren sowie eine Schaltung zur verbesserten Nutzung einer Kapazität in einem Zwischenkreis. Insbesondere betrifft die vorliegende Erfindung dabei Zwischenkreise für automobile Energiebordnetze, in welchen Spannungsripple auf einer Leitung zwischen einem Energiespeicher und einem motorseitigen Inverter auftreten können.

Die zunehmende Elektrifizierung des Individualverkehrs hat dazu geführt, dass in elektrisch antreibbaren Fahrzeugen deutlich höhere Spannungen (im Bereich 400 V und größer) auftreten und zu verarbeiten sind, als sie bis vor ein paar Jahren in Fahrzeugbordnetzen auftraten. Während die Speicherung von Energie in einem (zumeist elektrochemischen) Energiespeicher als Gleichspannung erfolgt, wird meist ein Inverter (Gleichspannungs-Wechselspannungswandler) verwendet, um den elektrischen Motor (bzw. Generator) mit (dreiphasiger) Wechselspannung zu versorgen bzw. Wechselspannung aus dem (generatorisch betriebenen) Motor in den elektrochemischen Energiespeicher zu überführen.

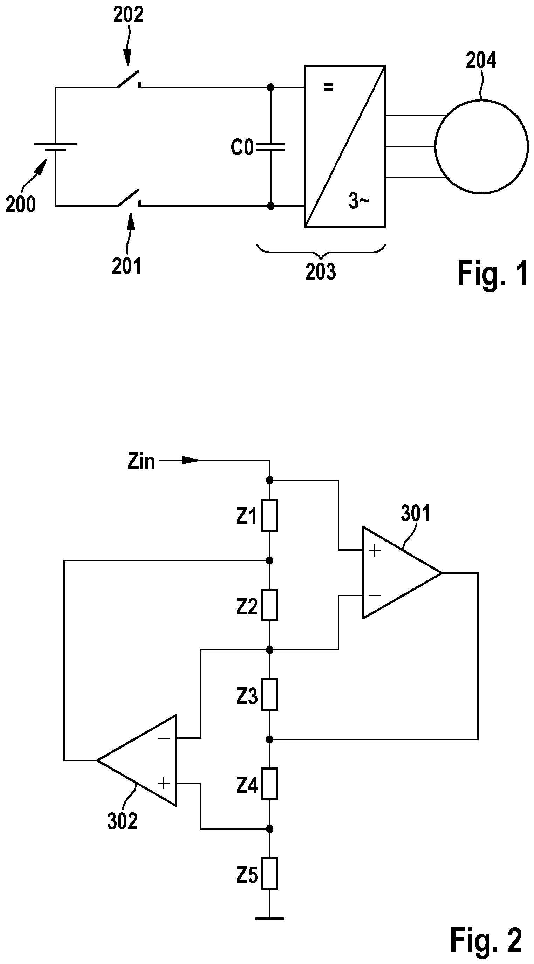

Durch den Inverter, welcher häufig Schaltwandler umfasst, wird der Bordnetzspannung eine Störgröße in Form einer Wechselspannung überlagert, welche zu Störungen im Bordnetz und zu Problemen elektromagnetischer Verträglichkeit (EMV) führen kann. Um die durch den Inverter erzeugte Störgröße zu dämpfen, wird zwischen dem Energiespeicher und dem Inverter oftmals eine sogenannte Zwischenkreiskapazität vorgesehen, welche bei Anliegen einer erhöhten Spannung Energie aufnimmt, und die Spannungsspitze somit "abfedert", und im Falle einer Spannungssenke elektrische Energie abgibt, und somit das Bordnetz "stützt". Ein solches System ist in Figur 1 dargestellt. Eine Batterie 200 ist über einen sogenannten Schütz 201, 202 mit einem Inverter 203 verbunden. Dem Eingang des Inverters 203 und der Batterie 200 ist eine Zwischenkreiskapazität C0 parallel geschaltet. Der Inverter 203 wandelt die Hochvoltgleichspannung in eine Dreiphasenwechselspannung, mit welcher ein Elektromotor 204 versorgt wird. Der Zwischenkreiskondensator C0 hat die Aufgabe, die durch den Inverter verursachten Wechselspannungsanteile auf der Gleichspannungsseite des Inverters zu dämpfen. Im Bereich der Pkw-Antriebstechnik hat ein solcher Kondensator üblicherweise eine Kapazität von 0,5 bis 1,5 mF und ist wegen der erforderlichen Spannungsfestigkeit von über 400 V sehr groß und kostspielig.

Weiter ist eine aktive Schaltung zur Bereitstellung einer vordefinierten Eingangsimpedanz nach Fig. 2 bekannt, in welcher ein erster Operationsverstärker 301 und ein zweiter Operationsverstärker 302 in Verbindung mit einem Spannungsteiler, bestehend aus Impedanzen Z1, Z2, Z3, Z4 und Z5, eine vordefinierte Eingangsimpedanz Zin = (Z1 x Z2 x Z3)/(Z2 x Z4) bereitstellen. Da die Funktions- und Wirkungsweise der in Fig. 2 gezeigten Schaltung dem Fachmann bekannt ist, wird nicht weiter auf diese eingegangen. Die EP2194629A1 offenbart ein Verfahren zur Störstromkompensation eines elektrischen Systems, in dem eine Kompensationsspannung durch Magnetisierung eines magnetisierbaren Rings mittels einer Magnetisierungsspule an einen Leiter angelegt wird.

Die WO2013/004019A1 offenbart ein DC-Verbindungsmodul, welches einen Spannungskompensationskreis umfasst, der ein Wechselstromsignal erzeugt, um AC-Oberwellen in einer DC-Spannung zu kompensieren.

Die US005329222A offenbart ein System und Verfahren zum Kompensieren von Störsignalen auf einer Leitung, wobei ein Spannungssignal in Reihe mit einem Übertragungssignal eingeleitet wird.

Es ist eine Aufgabe der vorliegenden Erfindung, die Kosten und die Größe sowie das Gewicht eines Zwischenkreiskapazität-verwendeten Bauteils zu verringern.

### Offenbarung der Erfindung

Die Erfindung bezieht sich auf ein Verfahren zur verbesserten Nutzung einer Kapazität in einem Zwischenkreis gemäß Anspruch 1 und einer hierzu korrespondierenden Schaltung gemäß Anspruch 6. Vorteilhafte Ausführungsformen sind in den abhängigen Ansprüchen definiert. Erfindungsgemäß wird vorgeschlagen, den Zwischenkreis-Kondensator durch eine aktive Beschaltung dynamisch zu vergrößern. Dies erlaubt eine Verwendung eines Kondensators einer geringeren Baugröße und damit eine erhebliche Platz- und Kostenersparnis bei gleichbleibendem Effekt auf das Spannungsripple auf dem Gleichspannungsbordnetz. Erfindungsgemäß wird hierzu ein Verfahren zur verbesserten Nutzung einer Kapazität in einem Zwischenkreis vorgeschlagen, welches die Merkmale gemäß Anspruch 1 aufweist. Als Kapazität wird nachfolgend ein eine Kapazität bereitstellendes Bauteil (z.B. Kondensator) bzw. eine solche Baugruppe bezeichnet, dessen Kapazitätswert erfindungsgemäß dynamisch vergrößert wird. Dabei wird eine Änderung einer elektrischen Spannung über der Kapazität in dem Zwischenkreis erfasst. Dies kann beispielsweise über einen Hochpass oder einen Bandpass erfolgen, um die unerwünschten Spannungsripple-Anteile aus dem Hochvoltsignal zu separieren. Die Erfassung erfolgt dabei vorzugsweise im Bereich eines Hochvoltanschlusses der Kapazität im Zwischenkreis. Im einfachsten Fall kann dies eine gemeinsame Klemme der Kapazität und einem Eingang des Hochpasses bzw. Bandpasses sein. Jedoch sei erfindungsgemäß dabei nicht ausgeschlossen, dass weitere Bauteile zwischen der Kapazität und dem Erfassungspunkt angeordnet sind. Es ist lediglich erforderlich, dass die erfasste Größe repräsentativ für auf dem Gleichspannungsbordnetz bestehende Spannungsripple ist. Weiter wird erfindungsgemäß in Abhängigkeit der Änderung der elektrischen Größe elektrische Energie zum Kompensieren der Änderung in die Kapazität eingespeist. Dies kann beispielsweise durch einen masseseitigen Anschluss der Kapazität erfolgen. Auf diese Weise ist der Punkt, an welchem die Spannungsgröße erfasst wird, und der Punkt, über welchen die Änderung kompensiert werden soll, durch die Kapazität voneinander entkoppelt. Das Einspeisen erfolgt dabei als aktiver Vorgang, bei welchem zusätzliche Energie aufgebracht wird, um das Gleichspannungsbordnetz zu stützen, indem der Kapazität im Falle einer negativen Ripplespannung Energie zugeführt wird und im Falle einer positiven Ripplespannung Energie entzogen wird. Auf diese Weise kann die tatsächliche Größe der Kapazität gegenüber den im Stand der Technik bekannten Schaltungen geringer ausfallen und zudem die Spannungsripple besser kompensiert werden.

Die Unteransprüche zeigen bevorzugte Weiterbildungen der Erfindung.

Bevorzugt kann (wie weiter oben beschrieben) die Änderung der elektrischen Spannung durch ein einem Gleichspannungssignal überlagertes Störsignal erfolgen, welches insbesondere ein durch einen Inverter verursachtes periodisches Wechselsignal umfasst. Mit anderen Worten wird das Spannungsripple durch Schaltvorgänge innerhalb eines Inverters verursacht, welcher an dem Zwischenkreis angeschlossen ist. Derartige Schaltvorgänge weisen häufig harmonische Komponenten auf, welche durch die erfindungsgemäße Schaltung erfasst, analysiert und kompensiert werden können. Dabei kann insbesondere bei quasistatischen Vorgängen die Kompensation verbessert werden, indem die periodischen Anteile des Schaltsignals analysiert und nachfolgend prädiktiv kompensiert werden. Mit anderen Worten kann das Störsignal vorhergesagt werden und somit eine besonders effektive Kompensation desselben durchgeführt werden.

Bevorzugt kann die dabei eingespeiste elektrische Größe zur Kompensation des Spannungsripple getaktet und/oder unter Vermittlung einer analogen Verstärkung erzeugt werden. Mit anderen Worten kann bei der Kompensation ein Signal ebenfalls durch Schaltvorgänge erzeugt werden und alternativ oder zusätzlich mittels einer analogen Verstärkung an den Spannungshub auf dem Gleichspannungsbordnetz angepasst werden. Da eine Signalerzeugung unter Zuhilfenahme von Schaltvorgängen äußerst geringe Verluste ermöglicht und eine analoge Verstärkung stabil ist und geringe Verzögerungen ermöglicht, erhöht sich die Wirtschaftlichkeit des vorgeschlagenen Verfahrens.

Weiter bevorzugt umfasst das Erfassen der Änderung eine Hochpassfilterung. Dabei kann beispielsweise eine aus einer zusätzlichen Kapazität und einem gegen Masse geschalteten Ohm'schen Widerstand realisierte Schaltungsbaugruppe verwendet werden, welche eingangsseitig am Hochvoltbordnetz angeschlossen ist und ausgangsseitig das zur Kompensation erforderliche Erfassungssignal bereitstellt. Selbstverständlich kann auch die Hochpassfilterung eine aktive Schaltungsbaugruppe und/oder digitale Filter umfassen. Auf diese Weise kann ein vergleichsweise hoher Gleichspannungsanteil durch den Hochpass von einer nachfolgenden Auswertung ferngehalten werden. Die notwendige Spannungsfestigkeit der elektrischen Bauteile verringert sich somit erheblich.

Weiter bevorzugt kann das Erfassen der Änderung eine Verarbeitung des elektrischen Signals auf dem Gleichspannungsbordnetz mittels eines Mikrocontrollers erfolgen. Beispielsweise kann dieser periodische Anteile im Spannungssignal identifizieren und einen Zeitversatz der Kompensation gegenüber dem Spannungsripple exakt dimensionieren. Auf diese Weise kann eine besonders exakte Kompensation der Spannungsripple erfolgen.

Gemäß einem zweiten Aspekt der vorliegenden Erfindung wird eine Schaltung, insbesondere in einem Zwischenkreis, für ein automobiles Energiebordnetz vorgeschlagen. Die Schaltung dient dabei einer verbesserten Nutzung einer Kapazität in einem Zwischenkreis, wie er oben bereits diskutiert worden ist. Hierzu weist die Schaltung einen hochvoltseitigen Anschluss und einen massenseitigen Anschluss zum Anschließen einer Kapazität auf. Hiermit sei darauf hingewiesen, dass die Präsenz einer Kapazität, welche als Zwischenkreiskapazität vorzusehen ist, nicht erforderlich ist, um unter den Schutzbereich der beigefügten Ansprüche zu fallen. Der hochvoltseitige Anschluss ist dabei eingerichtet, die anzuschließende Kapazität in Richtung des Gleichspannungsbordnetzes zu verbinden. Der masseseitige Anschluss dient dazu, die anzuschließende Kapazität in Richtung der elektrischen Masse zu verbinden. Hierbei ist es selbstverständlich nicht erforderlich, dass der hochvoltseitige Anschluss tatsächlich auf dem Hochvoltpotential liegt oder der masseseitige Anschluss auf dem Potential der elektrischen Masse liegt. Es sei lediglich eine elektrische Orientierung für die relative Positionierung zu den übrigen Schaltungsbauteilen gegeben. Zudem weist die erfindungsgemäße Schaltung eine Erfassungseinheit zum Erfassen einer Änderung einer elektrischen Spannung in einem ersten Teil der Schaltung auf. Der erste Teil der Schaltung ist dadurch charakterisiert, dass er dem Potential des Gleichspannungsbordnetzes zugeordnet ist. Wie weiter oben ausgeführt, ist nicht zwingend eine Identität der an der Erfassungseinheit anliegenden Spannung und der Hochvoltgleichspannung erforderlich. Es soll allenfalls ein Signal erfasst werden, welches zur Erzeugung eines geeigneten Kompensationssignals geeignet ist. Dabei kann die Erfassungseinheit - wie ebenfalls oben beschrieben - aktiv oder passiv ausgeführt sein. Mit anderen Worten kann die Erfassungseinheit beispielsweise aus einem passiven Hochpass- oder Bandpass-Netzwerk ausgeführt sein und alternativ oder zusätzlich aktive Schaltungen, wie z.B. eine Mikrocontroller umfassen, mittels welchem ein digitales Filter realisiert werden kann. Weiter ist erfindungsgemäß eine Kompensationseinheit in der Schaltung vorgesehen, mittels welchem eine elektrische Störgröße auf dem Gleichspannungsbordnetz zumindest anteilig kompensiert werden kann. Dabei ist der hochvoltseitige Anschluss zwischen dem ersten Teil der Schaltung und dem masseseitigen Anschluss angeordnet. Mit anderen Worten befindet sich der erste Teil der Schaltung, in welchem die Erfassungseinheit ihr Eingangssignal abgreift, im Bereich zwischen dem Gleichspannungspotential und dem hochvoltseitigen Anschluss der Kapazität. Dabei kann der erste Teil der Schaltung die vorgenannten Grenzen zudem umfassen. Erfindungsgemäß ist die Kompensationseinheit eingerichtet, die Änderung der elektrischen Störgröße zumindest anteilig zu kompensieren, indem sie elektrische Energie in den massenseitigen Anschluss einspeist bzw. elektrische Energie aus dem masseseitigen Anschluss entnimmt. Auf diese Weise wird über die Kompensationseinheit die Kapazität im Zwischenkreis mit elektrischer Energie versorgt, wenn die Erfassungseinheit einen Spannungseinbruch im Gleichspannungsnetz meldet und der Kapazität im Zwischenkreis elektrische Energie entzogen, wenn die Erfassungseinheit eine erhöhte Spannung gegenüber einem Mittelwert meldet. Es ergibt sich eine elektrische Schaltung, welche eine Verwendung einer deutlich verringerten Kapazität (Bauteil) ermöglicht, so dass Kosten, Gewicht und Bauraum gegenüber den im Stand der Technik bekannten Schaltungen eingespart werden können.

Weiter bevorzugt weist die Erfassungseinheit einen Hochpassfilter und alternativ oder zusätzlich einen Mikrocontroller auf. Mittels dieser Elemente können - wie oben ausgeführt - passive und/oder aktive Baugruppen zur Erfassung der Störgröße realisiert werden. Dies bietet den Vorteil, dass im ersten Fall besonders einfache und im zweiten Fall besonders leistungsfähige und exakte Erfassungseinheiten realisiert werden können.

Weiter bevorzugt weist die Kompensationseinheit einen digitalen Verstärker und/oder einen analogen Verstärker auf. Während ein digitaler Verstärker eine hohe Effizienz (Wirkungsgrad) bei der Versorgung der Kapazität mit Energie aufweist, ist ein analoger Verstärker stabil und ermöglicht eine geringe zeitliche Verzögerung zwischen Eingangs- und Ausgangsgröße. Bei der Kombination beider Bauteile können die jeweiligen Vorteile zu Lasten eines erhöhten Aufwandes sowie erhöhter Kosten gemeinsam erzielt werden.

Weiter bevorzugt weist die Kompensationseinheit einen Energiepuffer, insbesondere in Form eines Speicherkondensators, auf. Alternativ oder zusätzlich kann eine Induktivität für den Energiepuffer verwendet werden. Mittels dieses Energiepuffers kann die Kompensationseinheit eingerichtet sein, elektrische Energie aus dem Zwischenkreis (der Gleichspannung) zu puffern und zur Versorgung der Kompensationseinheit bereitzuhalten. Auf diese Weise erübrigt sich eine zusätzliche Spannungsversorgung zum Betreiben der Kompensationseinheit.

Weiter bevorzugt weist die Kompensationseinheit einen Gleichspannungs-Gleichspannungs (DC/DC)-Wandler auf, welcher eingerichtet ist, elektrische Energie in den massenseitigen Anschluss der Kapazität einzubringen. Da ein DC/DC-Wandler geringe Verluste aufweist und über eine Schaltfrequenz Spannungen unterschiedlicher Größen ineinander überführen kann, stellt ein DC/DC-Wandler eine geeignete funktionale Baugruppe innerhalb einer Kompensationseinheit gemäß der vorliegenden Erfindung dar.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Schaltbild eines Hochvoltspannungsbordnetzes in einem elektrisch antreibbaren Fahrzeug;
- Figur 2: eine aktive Schaltung zur Realisierung einer vordefinierten Eingangsimpedanz;
- Figur 3: ein erstes Ausführungsbeispiel einer Schaltung gemäß der vorliegenden Erfindung;
- Figur 4: ein zweites Ausführungsbeispiel einer Schaltung gemäß der vorliegenden Erfindung;
- Figur 5: ein drittes Ausführungsbeispiel einer Schaltung gemäß der vorliegenden Erfindung;
- Figur 6: ein viertes Ausführungsbeispiel einer Schaltung gemäß der vorliegenden Erfindung;
- Figur 7: ein fünftes Ausführungsbeispiel einer Schaltung gemäß der vorliegenden Erfindung;
- Figur 8: ein sechstes Ausführungsbeispiel einer Schaltung gemäß der vorliegenden Erfindung;
- Figur 9: ein siebtes Ausführungsbeispiel einer Schaltung gemäß der vorliegenden Erfindung; und
- Figur 10: ein Ablaufdiagramm, visualisierend Schritte eines Verfahrens gemäß einem Ausführungsbeispiel der vorliegenden Erfindung.

### Ausführungsformen der Erfindung

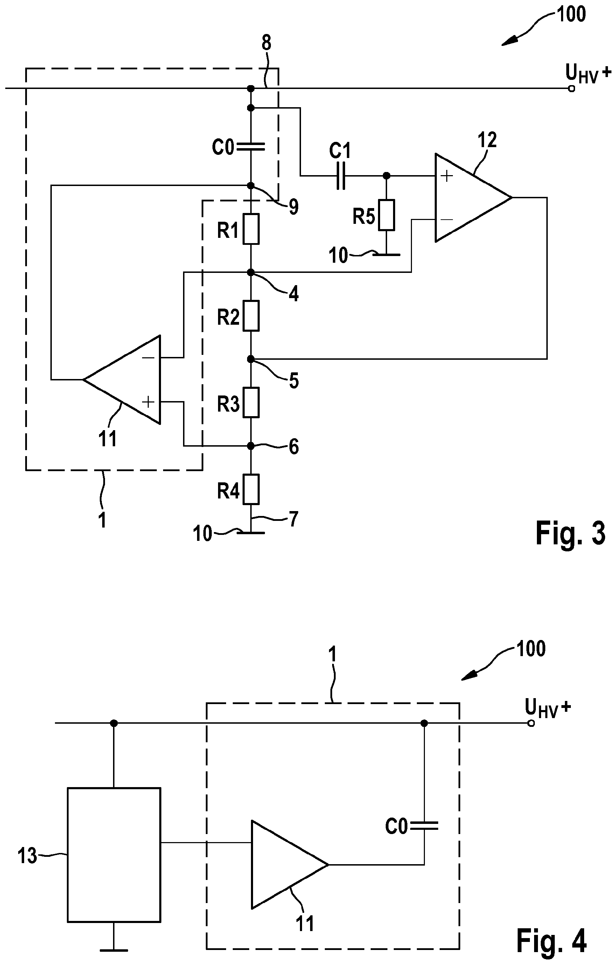

Figur 3 zeigt eine Schaltung 100 gemäß der vorliegenden Erfindung, wie sie zur Glättung von Spannungsripple in einem Gleichspannungshochvolt (HV)-Bordnetz Verwendung finden kann. Ein Anschlusspunkt 8 fällt mit dem Hochvoltpotential UHV+ des Gleichspannungsbordnetzes sowie mit einem hochvoltseitigen Anschluss der Kapazität C0 zusammen. Masseseitig ist ein Anschlusspunkt 9 vorgesehen, an welchem ein erster Widerstand R1 angeschlossen ist. Der Widerstand R1 ist andererseits an einem Anschlusspunkt 4 mit einem zweiten Widerstand R2 verbunden. Andererseits ist der zweite Widerstand R2 an einem Anschlusspunkt 5 mit einem dritten Widerstand R3 verbunden. Andererseits ist der dritte Widerstand R3 an einem Anschlusspunkt 6 mit einem vierten Widerstand R4 verbunden. Andererseits ist der vierte Widerstand R4 mit einem Anschlusspunkt 7 verbunden, der mit der elektrischen Masse 10 zusammenfällt. Am Anschlusspunkt 8 ist eine Erfassungseinheit umfassend einen Kondensator C1 und einen gegen Masse 10 geschalteten fünften Widerstand R5 vorgesehen. Zwischen dem Kondensator C1 und dem fünften Widerstand R5 ist ein erster Anschluss eines Operationsverstärkers 12 angeschlossen. Der andere eingangsseitige Anschluss des Operationsverstärkers 12 ist mit dem Anschlusspunkt 4 zwischen dem ersten Widerstand R1 und dem zweiten Widerstand R2 verbunden. Ausgangsseitig ist der Operationsverstärker 12 mit dem Anschlusspunkt 5 zwischen dem zweiten Widerstand R2 und dem dritten Widerstand R3 verbunden. Als zweiter Operationsverstärker 11, welcher als Leistungsverstärker ausgeführt sein kann, ist eingangsseitig jeweils mit dem Anschlusspunkt 4 zwischen dem ersten Widerstand R1 und dem zweiten Widerstand R2 bzw. mit dem Anschlusspunkt 6 zwischen dem dritten Widerstand R3 und dem vierten Widerstand R4 verbunden. Ausgangsseitig ist der Operationsverstärker 11 mit dem masseseitigen Anschluss 9 der Kapazität C0 verbunden. Die dargestellte Schaltung ist derart abgestimmt, dass ein dynamischer Spannungseinbruch am Anschlusspunkt 8 von der Erfassungseinheit C1, R5, 12 erfasst und über das Widerstandsnetzwerk R1, R2, R3, R4 dem Operationsverstärker 11 mitgeteilt wird, im Ansprechen worauf dieser in den masseseitigen Anschluss 9 der Kapazität C0 einen Strom einspeist, der den Spannungseinbruch kompensiert. Bei einer Spannungsüberhöhung auf dem Hochvoltbordnetz wird hingegen der Operationsverstärker 11 veranlasst, der Kapazität C0 über den masseseitigen Anschluss 9 Energie zu entziehen. Auf diese Weise wird der Regelbereich der Kapazität C0 erfindungsgemäß dynamisch vergrößert bzw. die Kapazität, welche über den Anschlusspunkt 8 zu messen ist, vergrößert.

Figur 4 zeigt eine Prinzipdarstellung eines anderen Ausführungsbeispiels einer Schaltung 100 gemäß der vorliegenden Erfindung. Dabei ist das in Figur 3 dargestellte Widerstandsnetzwerk nebst Erfassungseinheit symbolisch als Signalverarbeitung 13 dargestellt. Der Operationsverstärker 11 wird von der Signalverarbeitung 13 derart angesteuert, dass über die Kapazität C0, wie in Verbindung mit Figur 3 beschrieben, ein Spannungseinbruch bzw. eine Spannungsüberhöhung im Hochvoltbordnetz kompensiert werden kann. Zur besseren Vergleichbarkeit mit Figur 3 ist die aus der Kapazität C0 und dem Operationsverstärker 11 bestehende Kompensationseinheit 1, wie in Figur 3 dargestellt, gestrichelt umrandet.

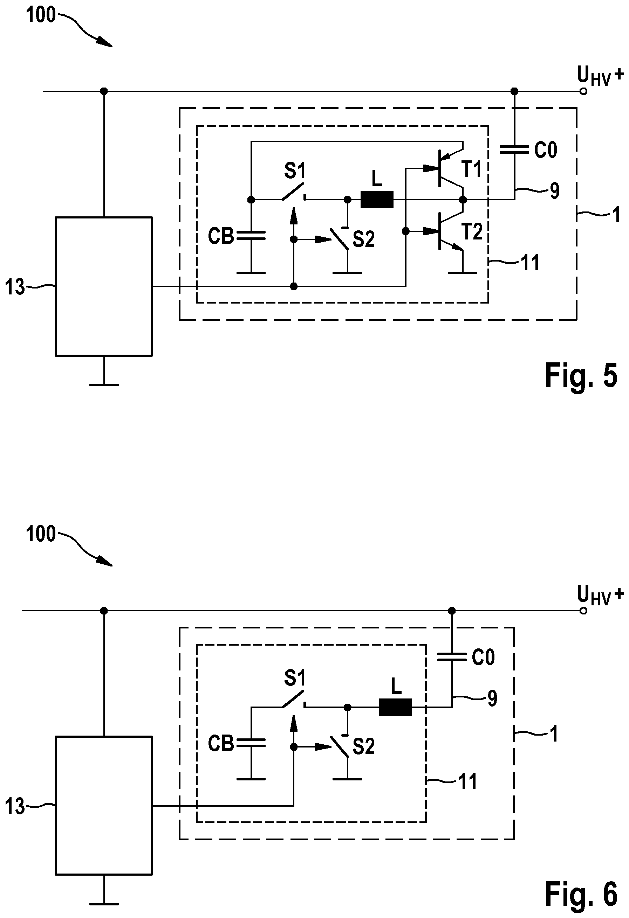

Figur 5 zeigt ein weiteres Ausführungsbeispiel für eine erfindungsgemäße Schaltung 100, in welcher die in Figur 4 dargestellte Kompensationseinheit 11 konkreter ausgestaltet ist. Eine Blockkapazität CB ist einerseits gegen Masse und andererseits mit einem ersten Schalter S1 sowie mit einem ersten Anschluss eines ersten Transistors T1 verbunden. Der erste Schalter S1 ist andererseits über einen zweiten Schalter S2 mit der elektrischen Masse verbunden. Den Anschlusspunkt zwischen dem ersten Schalter S1 und dem zweiten Schalter S2 verbindet eine Induktivität L mit dem zweiten Anschluss des ersten Transistors T1. Dieser Punkt dient als Ausgang der Kompensationseinheit 11 und ist wiederum über einen zweiten Transistor T2 mit der elektrischen Masse verbunden. Die Signalverarbeitung 13 steuert den ersten Schalter S1, den zweiten Schalter S2, den ersten Transistor T1 sowie den zweiten Transistor T2 an. Dies erfolgt derart, dass bei einem Spannungseinbruch auf dem Gleichspannungshochvoltnetz ein Strom in den masseseitigen Anschluss 9 der Kapazität C0 eingeprägt wird, während im Falle einer Überspannung im Hochvoltbordnetz die Kapazität C0 über ihren masseseitigen Anschluss 9 und die Kompensationseinheit 11 anteilig entladen wird. Die dargestellte Anordnung stellt eine mögliche Realisierung einer Hybridverstärker-Topologie dar, mittels welcher die Vorteile eines analogen Verstärkers mit denen eines digitalen Verstärkers kombiniert werden können.

Figur 6 zeigt die in Figur 5 dargestellte Anordnung, in welcher jedoch auf die Transistoren T1, T2 verzichtet wurde. Hierdurch vereinfacht sich die Schaltungsanordnung und die erforderliche Regelung wie folgt: Im Falle einer Überspannung auf dem Gleichspannungshochvoltbordnetz wird zunächst Schalter 1 geschlossen und Schalter 2 geöffnet. Dabei wird die Blockkapazität CB über die Induktivität L geladen. Soll die Energieentnahme aus der Kapazität C0 beschleunigt werden, kann Schalter 1 geöffnet und Schalter 2 geschlossen werden, so dass der Stromfluss über die Induktivität L in Richtung elektrischer Masse geleitet wird. Durch Schließen des ersten Schalters S1 und Öffnen des Schalters S2 kann nun in der Induktivität L gespeicherte Energie auf den Blockkondensator CB übertragen werden. Ein Schließen des ersten Schalters S1 "konserviert", die auf dem Blockkondensator CB gespeicherte Ladung. Die vorgenannten Schaltvorgänge werden durch die Signalverarbeitung 13 koordiniert.

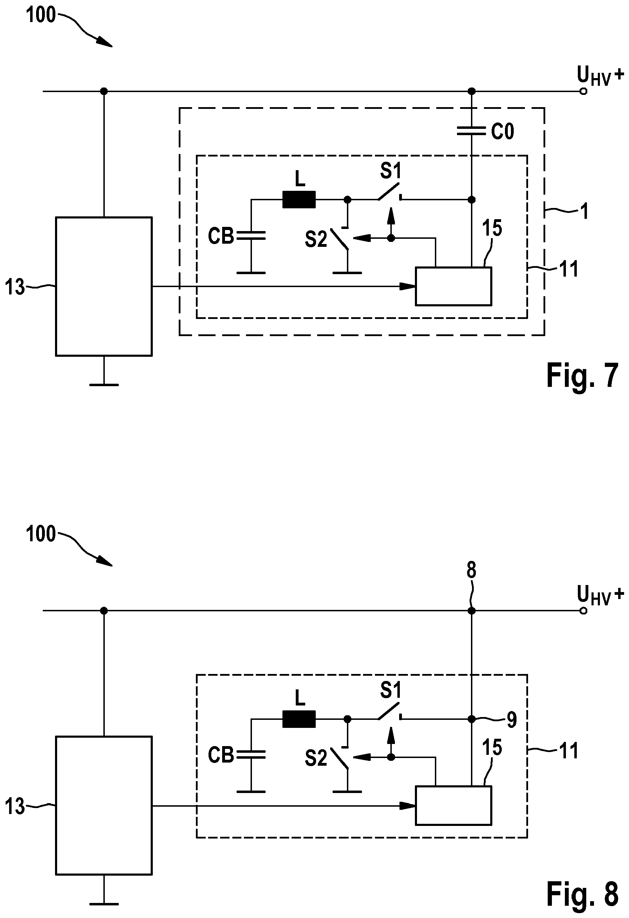

Figur 7 zeigt ein weiteres Ausführungsbeispiel einer erfindungsgemäßen Schaltung 100, in welcher gegenüber der in Figur 6 dargestellten Anordnung die Signalverarbeitung 13 einen in der Kompensationseinheit 11 enthaltenen Regler 15 ansteuert. Der Regler 15 erhält als Eingangsgröße somit ein Signal der Signalverarbeitungseinheit 13 sowie eine elektrische Eingangsgröße vom masseseitigen Anschluss der Kapazität C0. Der Regler 15 ist seinerseits eingerichtet, den ersten Schalter S1 und den zweiten Schalter S2 derart anzusteuern, dass in der Blockkapazität CB und der Induktivität L gespeicherte elektrische Energie zum Stützen des Hochvoltbordnetzes über die Kapazität C0 verwendet werden kann. Dabei arbeitet der DC/DC-Wandler der dargestellten Kompensationseinheit im Buck-Betrieb, falls Energie dem Bordnetz (bzw. der Kapazität C0) entnommen werden soll und im Boost-Betrieb, falls dem Hochvolt-Bordnetz (bzw. der Kapazität C0) Energie zugeführt werden soll. Dabei hat der Kondensator C0 hier vor allem die Aufgabe, den Duty Cycle des DC/DC-Wandlers in einem sinnvollen Bereich zu halten, damit die Schaltverluste nicht überproportional ansteigen.

Figur 8 zeigt eine weitere Schaltung gemäß einem Ausführungsbeispiel der vorliegenden Erfindung. Gemäß diesem Ausführungsbeispiel ist der hochvoltseitige Anschluss 8 und der masseseitige Anschluss 9 direkt (d.h. ohne Kondensator C0) miteinander verbunden. Auf diese Weise ist der Ausgang des DC/DC-Wandlers (bestehend aus der Blockkapazität CB, der Induktivität L sowie dem ersten Schalter S1 und dem zweiten Schalter S2) direkt mit dem Hochvolt-Bordnetz verbunden. In dieser Schaltung muss der DC/DC-Wandler wegen des hohen Spannungsabfalls über der Blockkapazität CB mit einem extrem hohen Duty Cycle arbeiten. Die Regelung ist daher gegenüber den vorgenannten Ausführungsbeispielen deutlich problematischer.

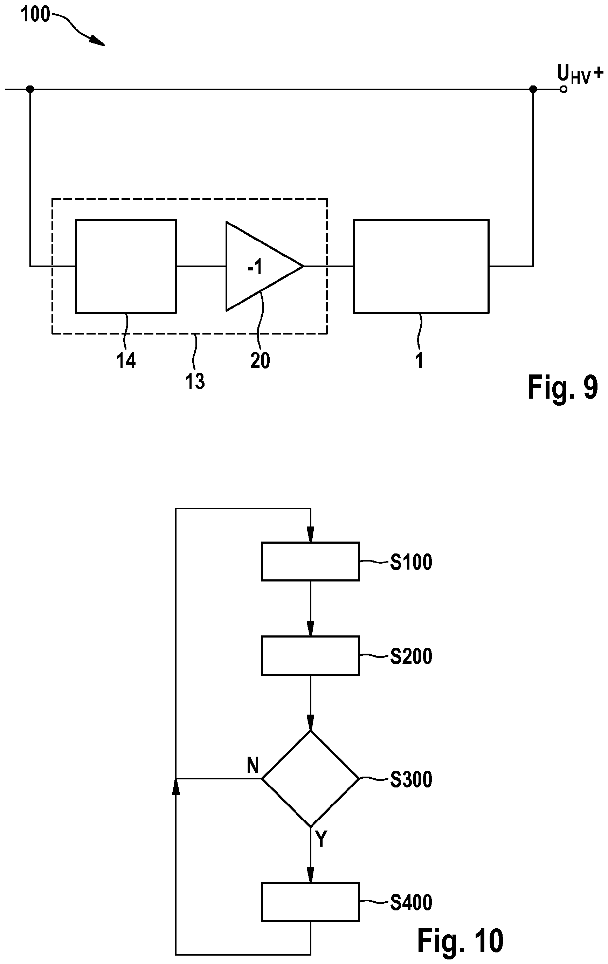

Figur 9 zeigt ein letztes Ausführungsbeispiel für eine Schaltung 100 gemäß der vorliegenden Erfindung, bei welcher die Erfassungseinheit 13 einen Hochpassfilter 14 und einen Inverter 20 aufweist. Der Ausgang des Inverters ist mit einer schematisch dargestellten Kompensationseinheit 1 verbunden. Dabei werden die Störungen auf dem Hochvolt-Bordnetz durch den Hochpass 14 gefiltert und über den Inverter 20 invertiert. Die Kompensationseinheit erhält das Ausgangssignal des Inverters als Stellgröße. Zur Kompensation wird ein (nicht dargestellter) leistungselektronischer Regler innerhalb der Kompensationseinheit 1 verwendet. Dieser enthält einen Leistungsverstärker oder eine Baugruppe, wie sie in Verbindung mit einem der vorgenannten Ausführungsbeispiele als Kompensationseinheit 1 vorgestellt worden ist. Die dargestellte Signalverarbeitungseinheit 11 kann alternativ auch durch einen entsprechend programmierten Mikrocontroller realisiert sein. Die Funktionsweise und Vorteile ergeben sich entsprechend den vorgenannten Ausführungsbeispielen.

Figur 10 zeigt ein Flussdiagramm, visualisierend Schritte eines Ausführungsbeispiels für ein erfindungsgemäßes Verfahren. Im Schritt S100 wird ein Signal auf dem Hochvoltgleichspannungsbordnetz eines elektrisch antreibbaren Verkehrsmittels hochpassgefiltert und anschließend mit einer Bezugsgröße (z.B. ein Mittelwert der Störgröße) verglichen (Schritt S200). Im Schritt S300 wird entschieden, ob das erfasste Signal von der Bezugsgröße abweicht. Ist dies nicht der Fall ("N"), fährt das Verfahren mit der Durchführung des vorgenannten Schrittes S100 fort. Weicht jedoch die ermittelte Größe von der Bezugsgröße ab ("Y"), so wird in Schritt S400 in Abhängigkeit der ermittelten Abweichung eine Größe zum Kompensieren der Abweichung ausgegeben. Übersteigt die ermittelte Größe die Bezugsgröße, so wird dabei Energie aus dem Hochvoltbordnetz entnommen. Unterschreitet die ermittelte Größe die Bezugsgröße, so wird dem Hochvoltbordnetz elektrische Energie zugeführt. Beides kann beispielsweise unter Vermittlung eines Zwischenkreiskondensators erfolgen, wie dies anhand unterschiedlicher Ausführungsbeispiele weiter oben beschrieben ist.

Es ist ein Kerngedanke der vorliegenden Erfindung, Spannungsripple auf einem elektrischen Hochvoltbordnetz zu kompensieren, indem eine Störgröße in dem Gleichspannungshochvoltbordnetz erfasst und in Abhängigkeit einer Abweichung von einem Bezugswert aktiv Energie zum Stützen der Spannung im Gleichspannungshochvoltbordnetz selbigem zugeführt wird. Dies kann beispielsweise durch masseseitiges Zuführen von Energie in eine das Gleichspannungshochvoltbordnetz stützende Kapazität durchgeführt werden, wodurch die Kapazität gegenüber passiven Schaltungen deutlich kleiner, leichter und kostengünstiger ausfallen kann.

## Patentansprüche

1. Verfahren zur verbesserten Nutzung einer Kapazität (C0) in einem Zwischenkreis umfassend die Schritte:
- Erfassen einer Änderung einer elektrischen Spannung über der Kapazität (C0) in dem Zwischenkreis, und
- in Abhängigkeit der Änderung der elektrischen Spannung Einspeisen elektrischer Energie in die Kapazität (C0) zum Kompensieren der Änderung,
**gekennzeichnet durch**:
- Speichern von Energie aus dem Zwischenkreis in einem Energiepuffer, zur Versorgung einer Kompensationseinheit (1), welche die elektrische Energie einspeist.

2. Verfahren nach Anspruch 1, wobei die Änderung der elektrischen Spannung durch ein einem Gleichspannungssignal überlagertes Störsignal erfolgt, welches insbesondere ein durch einen Inverter verursachtes periodisches Wechselsignal umfasst.

3. Verfahren nach Anspruch 1 oder 2, wobei die eingespeiste elektrische Energie getaktet und/oder unter Vermittlung einer analogen Verstärkung erzeugt wird.

4. Verfahren nach einem der vorstehenden Ansprüche, wobei das Erfassen der Änderung eine Hochpassfilterung umfasst.

5. Verfahren nach einem der vorstehenden Ansprüche, wobei das Erfassen der Änderung eine Verarbeitung der elektrischen Spannung mittels eines Mikrocontrollers umfasst.

6. Schaltung, insbesondere Zwischenkreis für ein automobiles Energiebordnetz, zur verbesserten Nutzung einer Kapazität (C0) in einem Zwischenkreis umfassend:
- einen hochvoltseitigen Anschluss (8) und einen masseseitigen Anschluss (9) zum Anschließen einer Kapazität (C0),
- eine Erfassungseinheit (C1, R5, 12; 13) zum Erfassen einer Änderung einer elektrischen Spannung in einem ersten Teil der Schaltung, und einer Kompensationseinheit (1), wobei
der hochvoltseitige Anschluss (8) zwischen dem ersten Teil der Schaltung und dem masseseitigen Anschluss (9) angeordnet ist und
- die Kompensationseinheit (1) eingerichtet ist, die Änderung der elektrischen Spannung zumindest anteilig zu kompensieren, indem sie elektrische Energie in den masseseitigen Anschluss (9) einspeist, **dadurch gekennzeichnet, dass**:
die Kompensationseinheit (1) weiter einen Energiepuffer, insbesondere einen Speicherkondensator (CB), und bevorzugt eine Induktivität (L) umfasst, wobei der Energiepuffer eingerichtet ist, Energie aus dem Zwischenkreis zur Versorgung der Kompensationseinheit (1) zu speichern.

7. Schaltung nach Anspruch 6, wobei
- die Erfassungseinheit (11) einen Hochpassfilter (C1, R5) und/oder einen Mikrocontroller umfasst.

8. Schaltung nach Anspruch 6 oder 7, wobei
- die Kompensationseinheit (1) einen digitalen Verstärker und/oder einen analogen Verstärker umfasst.

9. Schaltung nach einem der Ansprüche 6 bis 8, wobei
- die Kompensationseinheit (1) weiter einen DC/DC-Wandler (CB, L, S1, S2) umfasst, welcher eingerichtet ist, elektrische Energie in den masseseitigen Anschluss (9) einzubringen.

## Claims

1. Method for the improved use of a capacitance (C0) in an intermediate circuit, comprising the steps:
- detecting a change in an electric voltage across the capacitance (C0) in the intermediate circuit, and
- in dependence on the change of the electric voltage, feeding electrical energy into the capacitance (C0) for compensating for the change,
**characterized by**:
- storing energy from the intermediate circuit in an energy buffer, for supplying a compensation unit (1) which feeds in the electrical energy.

2. Method according to Claim 1, wherein the change in the electric voltage is produced by a disturbance signal superimposed on a direct- voltage signal, which disturbance signal, in particular, comprises a periodic alternating signal caused by an inverter.

3. Method according to Claim 1 or 2, wherein the electrical energy fed in is generated clocked and/or by mediation of an analog amplification.

4. Method according to one of the preceding claims, wherein the detecting of the change comprises high-pass filtering.

5. Method according to one of the preceding claims, wherein the detecting of the change comprises processing of the electric voltage by means of a microcontroller.

6. Circuit, particularly intermediate circuit for an on-board automobile energy system, for the improved use of a capacitance (C0) in an intermediate circuit, comprising:
- a high-voltage connection (8) and a ground connection (9) for connecting a capacitance (C0),
- a detection unit (C1, R5, 12; 13) for detecting a change of an electric voltage in a first part of the circuit, and
a compensation unit (1), wherein
the high-voltage connection (8) is arranged between the first part of the circuit and the ground connection (9), and
- the compensation unit (1) is configured to compensate for the change of the electric voltage at least proportionally in that it feeds electric energy into the ground connection (9),
**characterized in that**:
the compensation unit (1) also comprises an energy buffer, particularly a storage capacitor (CB), and preferably an inductance (L), wherein the energy buffer is configured to store energy from the intermediate circuit for supplying the compensation unit (1).

7. Circuit according to Claim 6, wherein
- the detection unit (11) comprises a high-pass filter (C1, R5) and/or a microcontroller.

8. Circuit according to Claim 6 or 7, wherein
- the compensation unit (1) comprises a digital amplifier and/or an analog amplifier.

9. Circuit according to one of Claims 6 to 8, wherein
- the compensation unit (1) also comprises a DC/DC converter (CB, L, S1, S2) which is configured to bring electric energy into the ground connection (9).

## Revendications

1. Procédé d'utilisation améliorée d'une capacité (C0) dans un circuit intermédiaire, comprenant les étapes suivantes :
- détection d'une modification d'une tension électrique aux bornes de la capacité (C0) dans le circuit intermédiaire, et
- en fonction de la modification de la tension électrique, injection d'énergie électrique dans la capacité (C0) en vue de compenser la modification,
**caractérisé par** :
- l'accumulation d'énergie issue du circuit intermédiaire dans un tampon d'énergie en vue d'alimenter une unité de compensation (1) qui injecte l'énergie électrique.

2. Procédé selon la revendication 1, la modification de la tension électrique étant effectuée par un signal parasite superposé à un signal de tension continue, lequel comprend notamment un signal alternatif périodique provoqué par un onduleur.

3. Procédé selon la revendication 1 ou 2, l'énergie électrique injectée étant générée de manière cadencée et/ou par transmission d'une amplification analogique.

4. Procédé selon l'une des revendications précédentes, la détection de la modification comprenant un filtrage passe-haut.

5. Procédé selon l'une des revendications précédentes, la détection de la modification comprenant un traitement de la tension électrique au moyen d'un microcontrôleur.

6. Circuit, notamment circuit intermédiaire pour un réseau de bord énergétique d'automobile, destiné à une utilisation améliorée d'une capacité (C0) dans un circuit intermédiaire, comprenant :
- une borne côté haute tension (8) et une borne côté masse (9) servant au raccordement d'une capacité (C0),
- une unité de détection (C1, R5, 12 ; 13) destinée à détecter une modification d'une tension électrique dans une première partie du circuit, et
- une unité de compensation (1),
la borne côté haute tension (8) étant disposée entre la première partie du circuit et la borne côté masse (9) et
- l'unité de compensation (1) étant conçue pour compenser au moins proportionnellement la modification de la tension électrique en injectant de l'énergie électrique dans la borne côté masse (9),
**caractérisé en ce que** :
l'unité de compensation (1) comporte en outre un tampon d'énergie, notamment un condensateur d'accumulation (CB), et de préférence une inductance (L), le tampon d'énergie étant conçu pour accumuler l'énergie issue du circuit intermédiaire en vue d'alimenter l'unité de compensation (1).

7. Circuit selon la revendication 6,
- l'unité de détection (11) comprenant un filtre passe-haut (C1, R5) et/ou un microcontrôleur.

8. Circuit selon la revendication 6 ou 7,
- l'unité de compensation (1) comprenant un amplificateur numérique et/ou un amplificateur analogique.

9. Circuit selon l'une des revendications 6 à 8,
- l'unité de compensation (1) comprenant en outre un convertisseur CC/CC (CB, L, S1, S2) qui est conçu pour introduire de l'énergie électrique dans la borne côté masse (9).
